# EUROPÄISCHE PATENTSCHRIFT

(11) **EP 1 683 595 B1**
(45) Veröffentlichungstag und Bekanntmachung des Hinweises auf die Patenterteilung: **27.02.2008**
(21) Anmeldenummer: 05026654.3
(22) Anmeldetag: 07.12.2005
(51) Int. Cl.: B23B 31/02, B23G 1/46

(54) **Gewindeschneidfutter**
Thread-cutting chuck
Mandrin de filetage

(30) Priorität: 21.01.2005 DE 102005002868
(43) Veröffentlichungstag der Anmeldung: 26.07.2006
(73) Patentinhaber: Hans Bayer Spezialzubehör für den Maschinenbau, 91278 Pottenstein (DE)
(72) Erfinder: Bayer, Hans, 91278 Pottenstein (DE); Bayer, August, 91278 Pottenstein (DE)
(74) Vertreter: Hofmann, Matthias

(56) Entgegenhaltungen:
- US-A- 3 174 168
- US-A- 3 178 739
- US-A- 5 310 292

## Beschreibung

Die Erfindung betrifft ein Gewindeschneidfutter, insbesondere für CNC-Bearbeitungszentren und CNC-Fräsmaschinen mit Synchronsteuerung, nach dem Oberbegriff des Anspruchs 1.

Ein derartiges Gewindeschneidfutter ist bekannt aus der US 3 174 168.

Weitere derartige Gewindeschneidfutter sind bekannt aus der US 5 310 292 und der US 3 178 739.

Ein weiteres Gewindeschneidfutter ist bekannt aus der DE 197 25 950 C2. Das durch die dortige Spielausgleichseinrichtung in Zug- und Druckrichtung ermöglichte Spiel hat sich zum Ausgleich z. B. eines Spindelspiels der Gewindeschneidmaschine als sinnvoll erwiesen. Bei bestimmten Schneidaufgaben für den Gewindebohrer kann jedoch kein Druckspiel toleriert werden.

Es ist daher die Aufgabe der vorliegenden Erfindung, ein Gewindeschneidfutter der eingangs genannten Art derart weiterzubilden, dass das von der Spielausgleichseinrichtung ermöglichte Spiel je nach Anwendung des Gewindeschneidfutters vorgegeben werden kann.

Diese Aufgabe ist erfindungsgemäß gelöst durch ein Gewindeschneidfutter mit den im Anspruch 1 angegebenen Merkmalen.

Erfindungsgemäß wurde erkannt, dass es mit zwei Sperrbolzen mit relativ geringem konstruktiven Aufwand möglich ist, das von der Spielausgleichseinrichtung ermöglichte Spiel zu beschränken und für bestimmte Anwendungsfälle sogar vollständig zu eliminieren. Die Spielausgleichseinrichtung arbeitet erfindungsgemäß nur dann in beiden Richtungen vollständig spielgebend, wenn dies vom Nutzer gewünscht ist. Dies erhöht die Anwendungsflexibilität des Gewindeschneidfutters.

Ein Sperrglied nach Anspruch 2 bringt Vorteile beim Gewindeeinschneiden in bestimmten Anwendungsfällen, da bei reduziertem Druckspiel des Gewindeschneidfutters Gewinde mit besonders engen Toleranzen geschnitten werden können.

Ein Sperrglied nach Anspruch 3 reduziert das Spiel in Druck- bzw. Zugrichtung auf Null. Dies ist für bestimmte Anwendungen, in denen enge Toleranzen gefordert sind, besonders vorteilhaft.

Ein Gewindestift DIN 915 nach Anspruch 4 ist ein Standardbauteil und lässt sich einfach zwischen einer Freigabestellung und einer Sperrstellung verlagern.

Ein Sprengring nach Anspruch 5 oder 7 stellt einen sicheren Gegenanschlag dar. Ein derartiger Gegenanschlag ist zudem konstruktiv wenig aufwändig.

Eine Druckanschlagshülse nach Anspruch 6 führt zu einer sicheren Aufnahme der bei maximalem Druckspiel auf die Spielausgleichseinrichtung wirkenden Kräfte. Insbesondere kann die Druckanschlagshülse so ausgebildet sein, dass sie gleichzeitig bei maximalem Druckspiel und auch bei maximalem Zugspiel ein Anschlagselement der Spielausgleichseinrichtung darstellt.

Eine Druckfeder nach Anspruch 8 führt zu einer automatischen Rückstellung der Spielausgleichseinrichtung in die Nullstellung. Bei einer besonders eleganten Ausgestaltung wird die Rückstellung vom maximalen Druckspiel einerseits und vom maximalen Zugspiel andererseits in die Nullstellung durch ein und dieselbe Druckfeder bewerkstelligt.

Ein Ausführungsbeispiel der Erfindung wird nachfolgend anhand der Zeichnung näher erläutert. In dieser zeigen:
- Fig. 1: einen axialen Längsschnitt durch ein Gewindeschneidfutter mit einer Bohreraufnahme und einem Futterschaft in einer Nullstellung zueinander;
- Fig. 2: einen Ausschnitt aus Figur 1, wobei die Bohreraufnahme zum Futterschaft maximales Zugspiel aufweist;
- Fig. 3: eine zu Figur 2 ähnliche Darstellung, wobei die Bohreraufnahme zum Futterschaft maximales Druckspiel aufweist; und
- Fig. 4: eine zu Figur 2 ähnliche Darstellung, bei der ein Sperrglied, welches ein Spiel der Bohreraufnahme zum Futterschaft in Druckrichtung sperrt, in eine Sperrstellung eingerückt ist.

Ein insgesamt mit 1 bezeichnetes Gewindeschneidfutter dient zur Halterung eines nicht dargestellten Gewindebohrers an einer ebenfalls nicht dargestellten Gewindeschneidmaschine, insbesondere an einem CNC-Bearbeitungszentrum und CNC-Fräsmaschine mit Synchronsteuerung.

Eine Bohreraufnahme 2 dient zur Halterung des Gewindebohrers. Hierzu weist die Bohreraufnahme 2 einen Aufnahmeraum 3 zur Aufnahme eines nicht dargestellten Schnellwechseleinsatzes auf, in welchem wiederum der Gewindebohrer eingesetzt ist. Im gehalterten Zustand fällt die Längsachse des Gewindebohrers mit einer Längsachse 4 der Bohreraufnahme 2 zusammen.

Zur maschinenseitigen Aufnahme des Gewindeschneidfutters 1 dient ein Futterschaft 5. Dieser ist an der Bohreraufnahme 2 unter axialem Spiel längs der Längsachse 4 mit Hilfe eines Sicherungsbolzens 6 gesichert. Letzterer ist als Gewindestift DIN 915 ausgeführt und radial in ein Innengewinde 7 des Futterschafts 5 eingeschraubt. Das freie Ende des Sicherungsbolzens 6 ragt zur Sicherung in radialer Richtung in eine Sicherungskammer 8 der Bohreraufnahme 2.

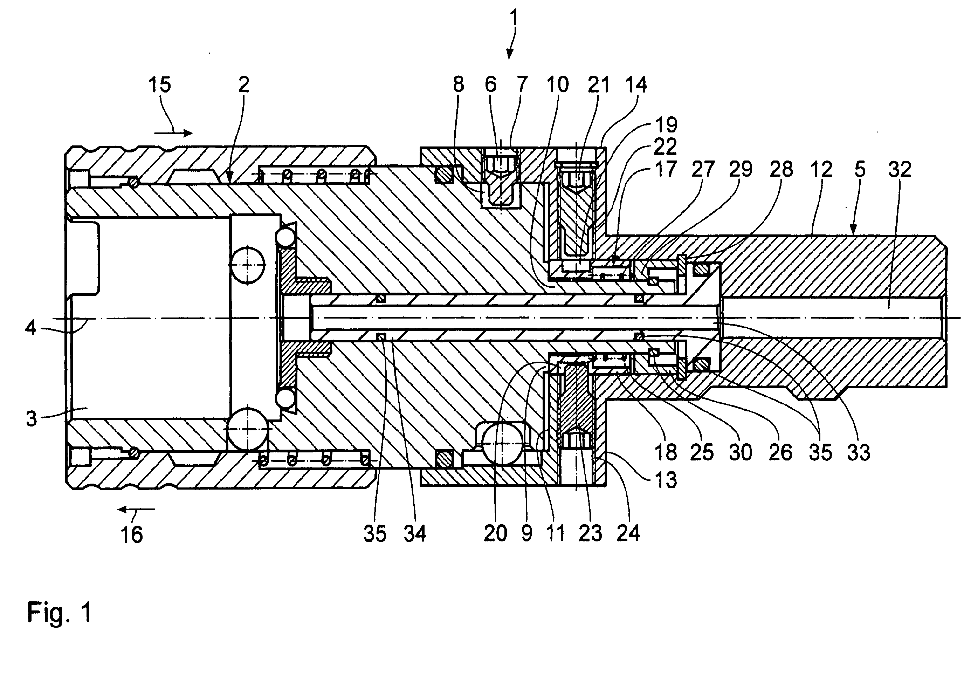

In Figur 1 rechts vom Sicherungsbolzen 6 verjüngt sich die Bohreraufnahme 2 über eine Umfangsstufe 9 hin zu einer Bohreraufnahmehülse 10. Im Bereich der Umfangsstufe 9 verjüngt sich auch der Futterschaft 5 über eine innere Umfangsstufe 11 hin zu einem Hülsenabschnitt 12 des Futterschafts 5. Eine äußere Umfangsstufe 13, über die sich der Futterschaft 5 zum Hülsenabschnitt 12 verjüngt, liegt in Figur 1 rechts beabstandet von der inneren Umfangsstufe 11, sodass im Axialbereich zwischen der inneren Umfangsstufe 11 und der äußeren Umfangsstufe 13 ein Ringabschnitt 14 der Futteraufnahme 5 gebildet ist.

Je nach den Kräftenverhältnissen beim Gewindeschneiden wirkt auf den Gewindebohrer eine Druckbelastung in Druckrichtung 15 oder eine Zugbelastung in Zugrichtung 16. Die Druckbelastung wirkt beim Gewindeeinschneiden und die Zugbelastung beim Zurückziehen des Gewindebohrers.

Abhängig von der Druck- oder Zugbelastung des Gewindebohrers lässt eine Spielausgleichseinrichtung 17 des Gewindeschneidfutters 1 ein axiales Spiel zwischen der Bohreraufnahme 2 und dem Futterschaft 5 zum Ausgleich eines maschinenseitigen axialen Spiels einerseits in Druckrichtung 15 und andererseits in Zugrichtung 16 zu. Zur Spielausgleichseinrichtung 17 gehört eine Federbuchse 18, die in der in Figur 1 gezeigten kräftefreien Nullstellung zwischen der Bohreraufnahme 2 und dem Futterschaft 5 am radial innersten Abschnitt der Umfangsstufe 9 anliegt. Die äußere Mantelfläche der Federbuchse 18 liegt an einer Innenwand des Futterschafts 5 im Bereich des Hülsenabschnitts 12 an. Die Federbuchse 18 weist zwei gegenüberliegende äußere Spielaufnahmen 19, 20 auf. Die Spielaufnahme 19 ist in Figur 1 oben und die Spielaufnahme 20 in Figur 1 unten dargestellt. Der Spielaufnahme 19 ist das freie Ende eines als Sperrglied dienenden Sperrbolzens 21 zugeordnet, der in Figur 1 in einer Freigabestellung dargestellt ist, in der er das von der Spielausgleichseinrichtung 17 zugelassene Spiel unbeeinflusst lässt. Der Sperrbolzen 21 ist als Gewindestift DIN 915 ausgeführt und in ein Innengewinde 22 eingeschraubt, welches radial im Ringabschnitt 14 des Futterschafts 5 ausgeführt ist.

Der Spielaufnahme 20 ist das freie Ende eines weiteren Sperrbolzens zugeordnet, der als Zuganschlagsglied 23 dient. Das Zuganschlagsglied 23 ist ebenfalls als Gewindestift DIN 915 ausgeführt und in ein radial ebenfalls im Ringabschnitt 14 ausgeführtes Innengewinde 24 eingeschraubt. In einer in der Zeichnung dargestellten Betriebsstellung des Zuganschlagsglieds 23 ragt das freie Ende von diesem in die Spielaufnahme 20 radial hinein.

In Figur 1 rechts der Spielaufnahmen 19, 20 gibt die Federbuchse 18 einen Ringraum 25 vor, der in Figur 1 nach außen, also von der Längsachse 4 weg, und nach links von der Federbuchse 18 begrenzt wird. Nach innen wird der Ringraum 25 von der Bohreraufnahmehülse 10 und nach rechts von einer Druckanschlagshülse bzw. Druckscheibe 26 begrenzt. Die äußere Mantelfläche der Druckanschlagshülse 26 liegt an der Innenwand des Futterschafts 5 im Bereich des Hülsenabschnitts 12 an. Die Druckanschlagshülse 26 ist von der Federbuchse 18 unabhängig längs der Längsachse 4 beweglich. Im Ringraum 25 ist eine Druckfeder 27 angeordnet. Letztere ist in der in Figur 1 gezeigten Nullstellung am wenigsten vorgespannt und drückt die Federbuchse 18 in Figur 1 nach links, sodass die in Figur 1 rechte Stufenwand der Spielaufnahme 20 am freien Ende des Zuganschlagsglieds 23 anschlägt. Gleichzeitig drückt die Druckfeder 27 in der Nullstellung die Druckanschlagshülse 26 nach rechts, sodass diese an einem inneren Umfangsbund des Futterschafts 5 anschlägt, der durch einen in einer inneren Umfangsnut des Futterschaftes 5 angeordneten Sprengring 28 gebildet ist.

Die Druckanschlagshülse 26 hat in Figur 1 links einen inneren Umfangsbund 29. Dieser liegt mit seiner in Figur 1 rechten Stufenwand an einem Zug-Gegenanschlag 30 der Spielausgleichseinrichtung 17 an. Der Zug-Gegenanschlag 30 ist ein äußerer Umfangsbund der Bohreraufnahmehülse 10 und durch einen Sprengring gebildet, der in einer Umfangsnut der Bohreraufnahmehülse 10 eingelegt ist.

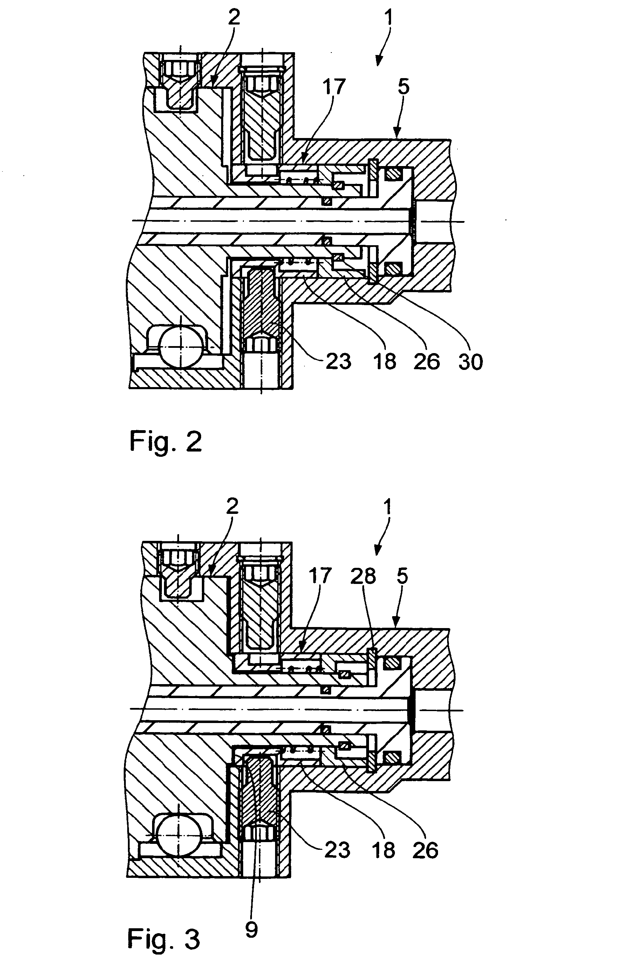

Figur 2 zeigt einen Ausschnitt des Gewindeschneidfutters 1 in einer Stellung, bei der das maximale Zugspiel, also das maximale Spiel in Zugrichtung 16, der Spielausgleichseinrichtung 17 genutzt ist. In dieser Zugstellung ist die Bohreraufnahme 2 aus dem Futterschaft 5 in Zugrichtung 16 entgegen der Vorspannkraft der Druckfeder 27 soweit herausgezogen, dass der Zug-Gegenanschlag 30 mit der rechten Flanke des freien Endes des Zuganschlagsglieds 23 zur Begrenzung des Zugspiels zusammenwirkt. Dabei steht der Zug-Gegenanschlag 30 mit dem Zuganschlagsglied 23 über die Druckanschlagshülse 26 und die Federbuchse 18 in Druckverbindung. Das maximale Zugspiel beträgt beispielsweise etwa 1 mm.

Figur 3 zeigt den Ausschnitt des Gewindeschneidfutters 1 in einer Stellung, bei der das maximale Druckspiel zwischen der Bohreraufnahme 2 und dem Futterschaft 5 genutzt ist. Dabei ist die Bohreraufnahme 2, wiederum entgegen der Vorspannkraft der Druckfeder 27, in Druckrichtung 15 relativ zum Futterschaft 5 verlagert, bis ein Druckanschlag erfolgt. Als Druckanschlagsglied wirkt dabei die Druckanschlagshülse 26, die mit ihrer in Figur 3 rechten Stirnwand am Sprengring 28 anliegt, der einen Druck-Gegenanschlag bildet. In der Druckanschlagsstellung nach Figur 3 liegt die in Figur 3 linke Stirnwand der Druckanschlagshülse 26 an der in Figur 3 rechten Stirnwand der Federbuchse 18 an. Die Federbuchse 18 wiederum liegt in der Stellung nach Figur 3 mit ihrer in Figur 3 linken Stirnwand am inneren Abschnitt der Umfangsstufe 9 an. Das maximale Druckspiel beträgt z. B. etwa 1 mm.

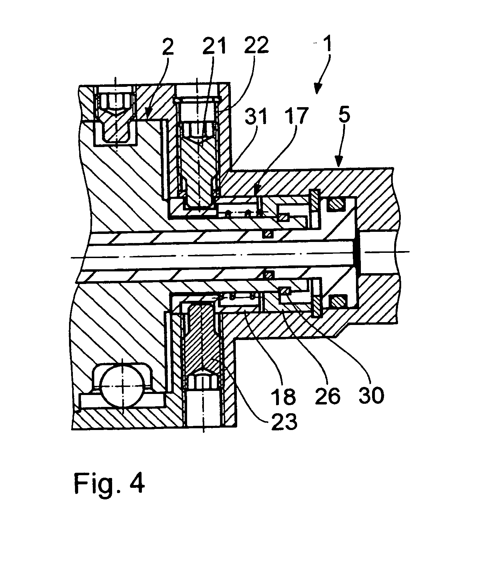

Figur 4 zeigt den Ausschnitt des Gewindeschneidfutters 1, wobei der Sperrbolzen 21 aus der Freigabestellung nach den Figuren 1 bis 3 in eine Sperrstellung verlagert ist. Diese Verlagerung erfolgt durch Einschrauben des Sperrbolzens 21 in das Innengewinde 22, bis das freie Ende des Sperrbolzens 21 in die Spielaufnahme 19 radial eingedrungen ist. In der Sperrstellung in Figur 4 ist ein Zugspiel durch die Spielausgleichseinrichtung 17 weiterhin gewährleistet, da zwischen der rechten Flanke des freien Endes des Sperrbolzens 21 und der linken Stirnwand der Druckanschlagshülse 26 ein größerer Spielraum vorliegt, als zwischen der rechten Flanke des freien Endes des Zuganschlagsglieds 23 und der linken Stirnwand der Druckanschlagshülse 26. Es kann daher auch bei in Sperrstellung eingerückten Sperrbolzen 21 das maximale Zugspiel der Spielausgleichseinrichtung 17 genutzt werden.

Druckspiel ist in der Sperrstellung nach Figur 4 nur insoweit möglich, als zwischen der in Figur 1 linken Flanke des freien Endes des Sperrbolzens 21 und der in Figur 4 linken Flanke der Spielaufnahme 19 ein Spielraum vorliegt. Die Spielaufnahme 19 dient also als Sperranschlag, der mit dem Sperrbolzen 21 zur Reduzierung des maximalen Druckspiels zusammenwirkt. Auch eine vollständige Eliminierung des Druckspiels ist möglich. Im letzten Fall liegt bei in Sperrstellung eingerückten Sperrbolzen 21 die linke Flanke von dessen Ende direkt an der linken Flanke der Spielaufnahme 20 an. Bei einer Druckbelastung der Bohreraufnahme 2 kann diese sich dann relativ zum Futterschaft 5 in axialer Richtung nicht mehr bewegen. Dies ist bei bestimmten Anwendungsfällen beim Gewindeeinschneiden erwünscht. Bei der dargestellten Ausführung kann eine vollständige Eliminierung des Druckspiels dadurch erreicht werden, dass der Sperrbolzen 21 soweit eingeschraubt wird, bis dessen Ende die Federbuchse 18 fest auf die Bohreraufnahmehülse 10 presst. In diesem Fall ist eine Relativbewegung der Bohreraufnahme 2 zum Futterschaft 5 in axialer Richtung nicht mehr möglich.

Bei einer alternativen, nicht dargestellten Ausgestaltung des Gewindeschneidfutters 1 begrenzt der Sperrbolzen 21 nicht nur das Druck-, sondern auch das Zugspiel. Bei einer weiteren, ebenfalls nicht dargestellten Variante des Gewindeschneidfutters begrenzt der Sperrbolzen 21 nur das Zugspiel, nicht aber das Druckspiel.

Zur Reduzierung einer Lateralbelastung auf den Sperrbolzen 21, der dieser, wenn er als Sperrglied in Druckrichtung wirkt, ausgesetzt ist, kann das freie Ende des Sperrbolzens 21 vor dem Eindringen in die Spielaufnahme 19 in einem Führungsring 31 geführt sein. Letzterer ist am der Längsachse 4 zugewandten Ende des Innengewindes 22 am Futterschaft 5 festgelegt.

Zur Kühlmittelführung weisen der Futterschaft 5 und die Bohreraufnahme 2 zwei miteinander fluchtende, axial verlaufende Kühlmittelkanäle 32, 33 auf. Der Kühlmittelkanal 32 ist direkt im Futterschaft 5 ausgeführt. Der Kühlmittelkanal 33 ist in einem im Wesentlichen hohlzylindrischen Kanaleinsatz 34 in der Bohreraufnahme 2 ausgeführt, der über insgesamt drei Dichtringe 35 gegen den Futterschaft 5 im Bereich des Hülsenabschnitts 12 einerseits und gegen die Bohreraufnahme 2 im Bereich der Bohreraufnahmehülse 10 andererseits abgedichtet ist. Zum Aufnahmeraum 3 hin steht der Kühlmittelkanal 34 mit nicht dargestellten weiteren Kühlmittelkanälen des Schnellwechseleinsatzes bzw. des Gewindebohrers in Fluidverbindung.

Das insgesamt beim Gewindeschneidfutter 1 zur Verfügung stehende Zug- bzw. Druckspiel beträgt je nach Ausführung des Gewindeschneidfutters 1 zwischen 0,2 mm und 1 mm, abgestuft in Inkrementen von jeweils 0,2 mm.

## Patentansprüche

1. Gewindeschneidfutter (1), insbesondere für CNC-Bearbeitungszentren und CNC-Fräsmaschinen mit Synchronsteuerung,
- mit einer Bohreraufnahme (2) zur Halterung eines Gewindebohrers, dessen Längsachse (4) eine axiale Richtung vorgibt,
- mit einem Futterschaft (5) zur maschinenseitigen Aufnahme des Gewindeschneidfutters (1),
- mit einer Spielausgleichseinrichtung (17), welche abhängig von einer Druck- oder Zugbelastung auf den Gewindebohrer ein axiales Spiel zwischen der Bohreraufnahme (2) und dem Futterschaft (5) zum Ausgleich eines maschinenseitigen axialen Spiels einerseits in Druckrichtung (15) und andererseits in Zugrichtung (16) zulässt,
- wobei die Spielausgleichseinrichtung (17) ein als Sperrbolzen ausgeführtes Sperrglied (21) zur Begrenzung des Druckspiels umfasst, welches
- verlagerbar ist zwischen einer Freigabestellung und einer Sperrstellung,
- in der Freigabestellung das von der Spielausgleichseinrichtung (17) zugelassene Spiel unbeeinflusst lässt,
- in der Sperrstellung durch Zusammenwirken mit einem Sperranschlag (19) das von der Spielausgleichseinrichtung (17) zugelassene Spiel mindestens in einer Richtung sperrt, also beschränkt oder eliminiert
**dadurch gekennzeichnet, dass** ein Zuganschlagsglied (23) der Spielausgleichseinrichtung (17) zur Begrenzung des Zugspiels durch einen weiteren Sperrbolzen ausgeführt ist.

2. Gewindeschneidfutter nach Anspruch 1, **dadurch gekennzeichnet, dass** das Sperrglied (21) in der Sperrstellung das von der Spielausgleichseinrichtung (17) zugelassene Spiel in Druckrichtung (15) sperrt.

3. Gewindeschneidfutter nach Anspruch 1 oder 2, **dadurch gekennzeichnet, dass** das Sperrglied (21) in der Sperrstellung das von der Spielsausgleichseinrichtung (17) zugelassene Spiel mindestens in einer Richtung eliminiert.

4. Gewindeschneidfutter nach einem der Ansprüche 1 bis 3, **dadurch gekennzeichnet, dass** der mindestens eine Sperrbolzen (21, 23) als Gewindestift DIN 915 ausgeführt ist.

5. Gewindeschneidfutter nach einem der Ansprüche 1 bis 4, **dadurch gekennzeichnet, dass** ein Zug-Gegenanschlag (30), mit dem ein oder das Zuganschlagsglied (23) bei der Begrenzung des Zugspiels zusammenwirkt, durch einen mit der Bohreraufnahme (2) verbundenen Umfangsbund, insbesondere durch einen Sprengring, gebildet ist.

6. Gewindeschneidfutter nach einem der Ansprüche 1 bis 5, **dadurch gekennzeichnet, dass** ein Druckanschlagsglied der Spielausgleichseinrichtung (17) zur Begrenzung des Druckspiels durch eine Druckanschlagshülse (26) gebildet ist, die bei Druckbelastung auf die Bohraufnahme (2) mit dieser in Kraftverbindung steht.

7. Gewindeschneidfutter nach einem der Ansprüche 1 bis 6, **dadurch gekennzeichnet, dass** ein Druck-Gegenanschlag, mit dem das Druckanschlagsglied (26) bei der Begrenzung des Druckspiels zusammenwirkt, durch einen mit dem Futterschaft (5) verbundenen Umfangsbund, insbesondere durch einen Sprengring (28), gebildet ist.

8. Gewindeschneidfutter nach einem der Ansprüche 1 bis 7, **gekennzeichnet durch** mindestens eine Druckfeder (27), die die Spielausgleichseinrichtung (17) bei Abwesenheit einer Druck- oder Zugbelastung auf den Gewindebohrer in einer Nullstellung vorspannt, wobei von der Nullstellung aus ein axiales Spiel zwischen der Bohreraufnahme (2) und dem Futterschaft (5) sowohl in Druckrichtung (15) als auch in Zugrichtung (16) gegeben ist.

## Claims

1. Thread-cutting chuck (1), in particular for CNC machining centres and CNC milling machines with synchronous drive, comprising
- a drill holder (2) for receiving a tap the longitudinal axis (4) of which determines an axial direction,
- a chuck shank (5) for incorporating the thread-cutting chuck (1) into the machine,
- a clearance compensator (17) which, depending on a compressive or tensile load on the tap, provides for an axial clearance between the drill holder (2) and the chuck shank (5) in order to compensate for an axial clearance inside the machine in a direction of compression (15) on the one hand and in a direction of extension (16) on the other hand,
- with the clearance compensator (17) comprising a locking member (21) which is configured as a locking screw in order to limit the compression clearance and which
- is displaceable between a release position and a locked position,
- does not affect the clearance provided by the clearance compensator (17) when in the release position,
- inhibits, i.e. limits or eliminates, the clearance provided by the clearance compensator (17) in at least one direction by cooperating with a locking stop (19) when in the locked position,
**characterized in that** another locking screw is configured as an extension stop member (23) of the clearance compensator (17) in order to limit the extension clearance.

2. Thread-cutting chuck according to claim 1, **characterized in that** the locking member (21), when in the locked position, inhibits the clearance provided by the clearance compensator (17) in the direction of compression (15).

3. Thread-cutting chuck according to claim 1 or 2, **characterized in that** the locking member (21), when in the locked position, eliminates the clearance provided by the clearance compensator (17) in at least one direction.

4. Thread-cutting chuck according to any one of the claims 1 to 3, **characterized in that** the at least one locking screw (21, 23) is configured as a DIN 915 headless set screw.

5. Thread-cutting chuck according to any one of the claims 1 to 4, **characterized in that** an extension counter stop (30) cooperating with a or the extension stop member (23) in order to limit the extension clearance is configured as a collar, in particular a spring ring, attached to the drill holder (2).

6. Thread-cutting chuck according to any one of the claims 1 to 5, **characterized in that** in order to limit the compression clearance, a compression stop member of the clearance compensator (17) is configured as a compression stop sleeve (26) which is in force connection with the drill holder whenever the drill holder is subject to a compressive load.

7. Thread-cutting chuck according to any one of the claims 1 to 6, **characterized in that** a compression counter stop cooperating with the compression stop member (26) in order to limit the compression clearance is configured as a collar, in particular a spring ring (28), attached to the chuck shank (5).

8. Thread-cutting chuck according to any one of the claims 1 to 7, **characterized by** at least one compressions spring (27) for prestressing the clearance compensator (17) in a zero position when the tap is not subject to a compressive or tensile load, said zero position providing for an axial clearance between the drill holder (2) and the chuck shank (5) both in the direction of compression (15) and in the direction of extension (16).

## Revendications

1. Mandrin de taraudage (1), en particulier pour des centres d'usinage CNC (commande numérique par ordinateur) et des fraiseuses CNC avec une commande synchronisée,
- avec un porte-mèche (2) pour la fixation d'un taraud dont l'axe longitudinal (4) prédétermine une direction axiale,
- avec une tige de mandrin (5) pour la réception du mandrin de taraudage (1) du côté de la fraiseuse,
- avec un dispositif de compensation de jeu (17) qui, indépendamment d'une charge de pression ou de traction sur le mandrin de taraudage, laisse un jeu axial entre le porte-mèche (2) et la tige de mandrin (5) pour la compensation d'un jeu axial du côté de la fraiseuse, d'une part, dans le sens de pression (15) et, d'autre part, dans le sens de traction (16),
- dans lequel le dispositif de compensation de jeu (17) comporte un organe de blocage (21) réalisé sous forme de boulon de blocage pour la limitation du jeu de pression, qui
- peut être positionné entre une position de déblocage et une position de blocage,
- dans la position de déblocage, n'exerce aucune influence sur le jeu permis par le dispositif de compensation de jeu (17),
- dans la position de blocage, bloque, et donc limite ou élimine, le jeu permis par le dispositif de compensation de jeu (17) au moins dans un sens par une action conjointe avec une butée de blocage (19),
**caractérisé en ce qu'**un organe de butée de traction (23) du dispositif de compensation de jeu (17) est prévu pour la limitation du jeu de traction à l'aide d'un autre boulon de blocage.

2. Mandrin de taraudage selon la revendication 1, **caractérisé en ce que**, dans la position de blocage, l'organe de blocage (21) bloque le jeu permis par le dispositif de compensation de jeu (17) dans le sens de pression (15).

3. Mandrin de taraudage selon la revendication 1 ou 2, **caractérisé en ce que**, dans la position de blocage, l'organe de blocage (21) élimine le jeu permis par le dispositif de compensation de jeu (17) au moins dans un sens.

4. Mandrin de taraudage selon l'une quelconque des revendications 1 à 3, **caractérisé en ce que** le au moins un boulon de blocage (21, 23) est réalisé sous forme de tige filetée DIN 915.

5. Mandrin de taraudage selon l'une quelconque des revendications 1 à 4, **caractérisé en ce qu'**une contre-butée de traction (30), avec laquelle un ou l'organe de butée de traction (23) coopère pour la limitation du jeu de traction, est constituée par un collet de butée circulaire assemblé avec le porte-mèche, en particulier par un circlips.

6. Mandrin de taraudage selon l'une quelconque des revendications 1 à 5, **caractérisé en ce qu'**un organe de butée de pression du dispositif de compensation de jeu (17) pour la limitation du jeu de pression est constitué par une douille de butée de pression (26) qui, en cas de charge de pression sur le porte-mèche (2), est en communication dynamique avec celui-ci.

7. Mandrin de taraudage selon l'une quelconque des revendications 1 à 6, **caractérisé en ce qu'**une contre-butée de pression, avec laquelle la douille de butée de pression (26) coopère pour la limitation du jeu de pression, est constituée par un collet de butée circulaire assemblé avec la tige de mandrin (5), en particulier par un circlips (28).

8. Mandrin de taraudage selon l'une quelconque des revendications 1 à 7, **caractérisé par** au moins un ressort de pression (27) qui précontraint le dispositif de compensation de jeu (17) dans une position nulle en cas d'absence d'une charge de pression ou de traction sur le taraud, un jeu axial étant présent, à partir de la position nulle, entre le porte-mèche (2) et la tige de mandrin (5) aussi bien dans le sens de pression (15) que dans le sens de traction (16).
